# EUROPÄISCHE PATENTANMELDUNG

(11) **EP 0 875 133 A1**
(43) Veröffentlichungstag der Anmeldung: **04.11.1998**
(21) Anmeldenummer: 98106502.2
(22) Anmeldetag: 08.04.1998
(51) Int. Cl.: A01D 34/14, F16B 35/04

(54) **Mähmesser**

(30) Priorität: 30.04.1997 US 841704
(71) Anmelder: Deere & Company, Moline, Illinois 61265-8098 (US)
(72) Erfinder: Herring, Joseph Fred, Moline, Illinois 61265 (US); Strathman, William Frost, Moline, Illinois 61265 (US); Ward, Frederick Samuel, Moline, Illinois 61265 (US); McCredie, Paul John, Milan, Illinois 61264 (US)
(74) Vertreter: Magin, Ludwig Bernhard

(57) **Zusammenfassung**

Ein Mähmesser ist mit Klingen (24) bestückt, die mittels Schrauben auf einem Messerträger (18) befestigt sind. Die Schrauben (26) weisen jeweils einen Hals (36) auf und werden durch Öffnungen (22) in dem Messerträger (18) gesteckt. Der Querschnitt sowohl des Halses (36) wie auch der Öffnung (22) ist nicht rund und nicht kantig, sondern vorzugsweise oval, so daß Kerbspannungen unterbleiben.

## Beschreibung

Die Erfindung betrifft ein Mähmesser mit einem Messerträger und wenigstens einer Klinge, die mittels wenigstens einer Schraube auf dem Messerträger festgelegt wird, die sich durch Öffnungen in dem Messerträger und Löcher in der Klinge erstreckt.

Die US-A-5,617,712 offenbart einen Mähbalken mit einem Mähmesser, dessen Klingen mittels spezieller Schrauben auf einem Messerträger befestigt werden, wobei nicht ersichtlich ist, wie derartige spezielle Schrauben ausgebildet sein sollten.

Der Prospekt "Schumacher Wechselschnitt-Mähsystem, Druckvermerk E-033.MS.994.SCH-0" zeigt ein Mähmesser, dessen Klingen mit Schrauben auf einem Messerträger festgelegt werden, deren Hals konisch geriffelt ist, so daß sich beim Anziehen der Schrauben ein Reibschluß ergibt.

Das der Erfindung zugrunde liegende Problem wird darin gesehen, daß derartige Schrauben nur einmal verwendet werden können und bei Beschädigung nur schwer aus der Öffnung entfernt werden können.

Dieses Problem wird erfindungsgemäß durch die Lehre des Patentanspruchs 1 gelöst, wobei in dem weiteren Patentanspruch die Lösung in vorteilhafter Weise weiterentwickelnde Merkmale aufgeführt sind.

Auf diese Weise werden die Schrauben drehfest in den Öffnungen gehalten, ohne daß es zu einem Reibschluß oder zu Kerbspannungen kommt.

Die ovale oder elliptische Form hat den Vorteil, daß sie aufgrund ihrer Symmetrie leicht herstell- und montierbar ist.

In der Zeichnung ist ein nachfolgend näher beschriebenes Ausführungsbeispiel der Erfindung dargestellt. Es zeigt:
- Fig. 1: eine perspektivische Explosionszeichnung eines erfindungsgemäßen Mähbalkens,

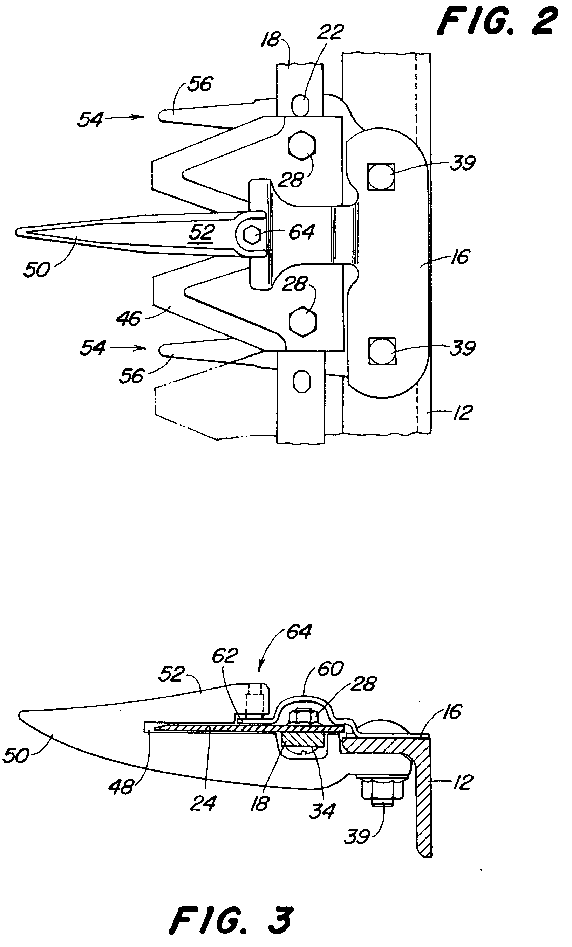

- Fig. 2: eine Draufsicht auf einen Bereich des Mähbalkens nach Figur 1,
- Fig. 3: einen Vertikalschnitt durch den Mähbalken im Bereich eines Mähfingers,
- Fig. 4: eine Draufsicht auf einen Endbereich des Mähbalkens nach Figur 1 und
- Fig. 5: einen Vertikalschnitt durch den Mähbalken in dessen Endbereich.

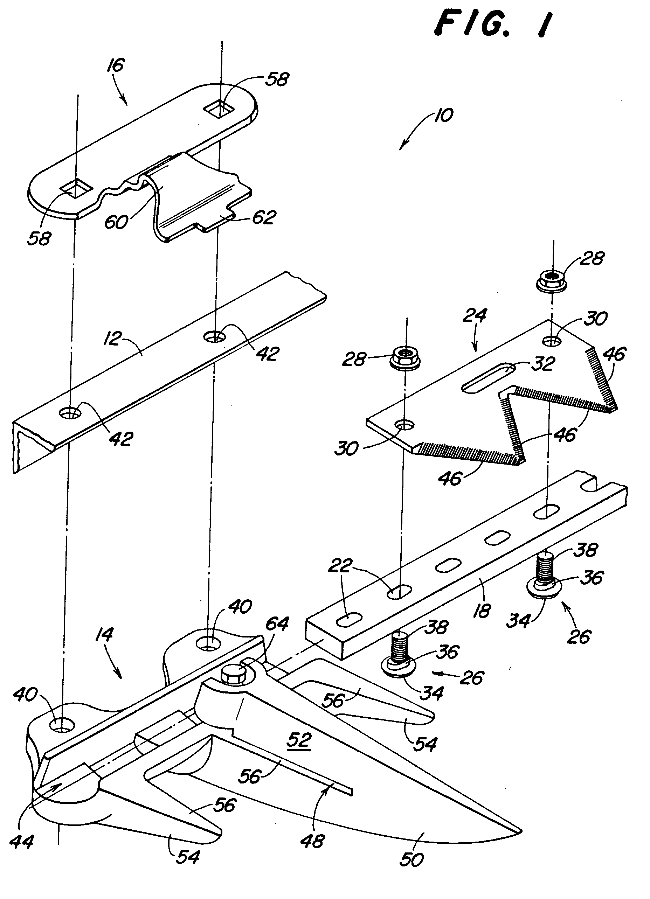

Die Explosionszeichnung in Figur 1 stellt einen Bereich eines erfindungsgemäßen Mähbalkens 10 dar. Der Mähbalken 10 enthält eine Tragschiene 12, an der Mähfinger 14 und Messerandrückplatten 16 befestigt sind. Ein Messerträger 18 ist in einer in den Mähfinger 14 eingearbeiteten Nut 20 gleitend aufgenommen. Der Messerträger 18 ist mit einer Vielzahl von ovalen Öffnungen 22 versehen. Die Tragschiene 12 und der Messerträger 18 erstrecken sich quer zu der Fortbewegungsrichtung einer den Mähbalken 10 tragenden Maschine. Die oval ausgebildeten Öffnungen 22 erstrecken sich ebenfalls in der Querrichtung. Eine Reihe von als Doppelklingen ausgebildeten Klingen 24, von denen nur eine gezeigt ist, ist auf den Messerträger 18 mittels Schrauben 26 und sechskantiger Muttern 28 befestigt.

Die Klinge 24 ist mit zwei Löchern 30 und einem Montageschlitz 32 versehen. Über den größten Teil der Länge des Messerträgers 18 sind die Klingen 24 lediglich mittels zweier Schrauben 26 auf dem Messerträger 18 gehalten, die durch die ovalen Öffnungen 22 in dem Messerträger 18 gesteckt werden und sich nach oben durch die Löcher 30 in der Klinge 24 erstrecken. Allerdings erstrecken sich an Trennstellen innerhalb des Messerträgers 18, wie dies in der US-A-5,040,363 gezeigt ist, vier Schrauben 26 durch vier zugelegene Öffnungen 22 in dem Messerträger 18 und nach oben durch die beiden Löcher 30 und den Montageschlitz 32 der Klinge 24. Die ovalen Öffnungen 22 werden dadurch erzeugt, daß ovale Löcher in den Messerträger 18 gestanzt werden.

Die Schrauben 26 sind mit runden Schraubenköpfen 34, einem ovalen Hals 36 und einem mit Gewinde versehenen Schaft 38 versehen. Der ovale Hals 36 der Schrauben 26 entspricht in seiner Form der der ovalen Öffnungen 22. Zum Zusammenbau der Klingen 24 mit dem Messerträger 18 setzt der Monteur die Schrauben 26 nach oben durch den Messerträger 18 und die Klingen 24 ein, so daß der runde Schraubenkopf 34 an dem Rücken des Messerträgers 18 zur Anlage kommt und sich der mit Gewinde versehene Schaft 38 nach oben bis über die Klinge 24 hinaus erstreckt. Die zusammenpassenden ovalen Öffnungen 22 und die ovalen Hälse 36 bewirken eine Festlegung der Schraube 26 gegen Drehung, so daß der Monteur lediglich die Muttern 28 anziehen muß, sobald diese auf den Schaft 38 der Befestigungsschraube 26 aufgedreht ist.

Der Mähfinger 14 wird mittels zweier in Figur 1 nicht gezeigter Schrauben 39 an der Tragschiene 12 befestigt, die sich durch Löcher 40 in dem Mähfinger 14 und Löcher 42 in der Tragschiene 12 erstrecken. Der Mähfinger 14 ist mit einer Kehle 44 versehen, in der der Messerträger 18 gleitend aufgenommen ist. Gezahnte Kanten 46 der Klingen 24 erstrecken sich von dem Messerträger 18 aus nach vorne und bewegen sich im Betrieb durch Schlitze 48 in einem dem Schutz der Klingen 24 dienenden Finger 50. Der Finger 50 ist mit einer oberen festen Lippe 52 versehen, die eine Art Dach für den Schlitz 48 bildet. Der Finger 50 wird von zwei Klingenstützen 54 flankiert. Der Finger 50 und die beiden Klingenstützen 54 sind mit Auflageflächen 56 versehen, die mit den gezahnten Kanten 46 der Klingen 24 zusammenwirken, um stehendes Erntegut durchzuschneiden. Es wird darauf hingewiesen, daß die beiden Mähfinger 14, die den gezeigten Mähfinger 14 flankieren, zwei Finger 50 an den gegenüberliegenden Enden und zwischen diesen eine Klingenstütze 54 enthalten würden.

Um eine gute Schneidwirkung aufrechtzuerhalten, ist es wichtig, daß die Anlage der Klinge 24 an den Auflageflächen 56 erhalten bleibt. Die Messerandrückplatte 16 ist aus Blech gebildet und mittels derselben Schrauben 39 an die Tragschiene 12 angebracht, die auch zum Befestigen der Mähfinger 14 an der Tragschiene 12 verwendet werden. Die Schrauben 39 erstrecken sich durch Löcher 58 in dem rückwärtigen Bereich der Messerandrückplatten 16. Die Messerandrückplatten 16 erstrecken sich von ihrem Befestigungsbereich aus nach vorne zu dem Finger 50 und enthalten einen gekrümmten Bereich 60, der sich über den Messerträger 18 erstreckt. Der vordere Bereich der Messerandrückplatte 16 ist mit einer Zunge 62 versehen, die sich in den Schlitz 48 zwischen der oberen Lippe 52 und der Klinge 24 erstreckt. Eine Einstellschraube 64 ist in die obere Lippe 52 eingedreht und erstreckt sich durch diese, um eine Vorrichtung zum Einstellen der vertikalen Position der Messerandrückplatte 16 zu bilden. Durch ein Verdrehen der Einstellschraube 64 kann eine Bedienungsperson die Messerandrückplatte 16 nach unten drücken und die richtige Anlage an der Oberseite der Klinge 24 erzeugen. Die Messerandrückplatte 16 ist nach dem Finger 50 ausgerichtet, so daß sich ein guter Gutfluß über den Mähbalken 10 ergibt.

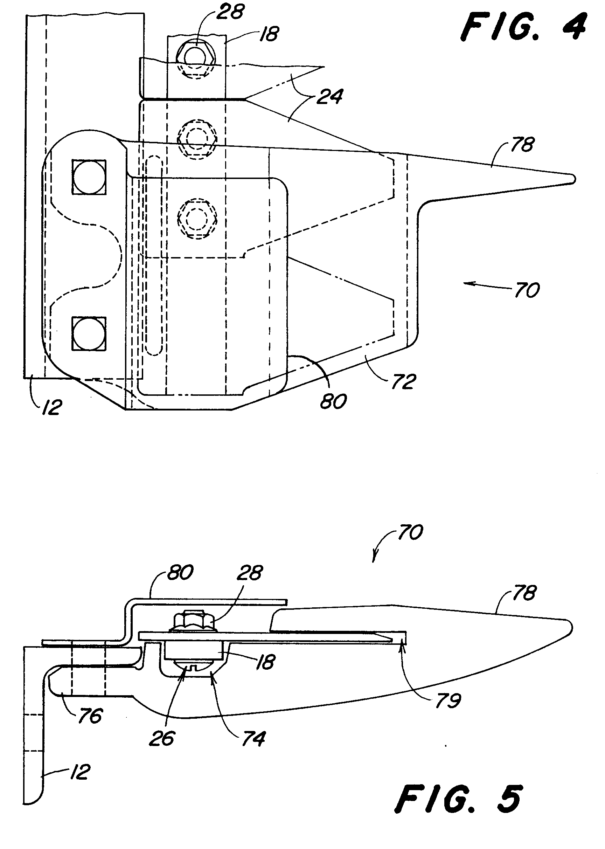

Die Figuren 4 und 5 sind auf einen speziellen Abschlußfingerabschnitt 70 gerichtet, der auf der nicht angetriebenen Seite des Mähbalkens 10 verwendet wird. Der Abschlußfingerabschnitt 70 ist ein einheitlicher Schmiedeteil, der einen Grundkörper 72 mit einer Kehle 74 zur Aufnahme des Messerträgers 18, einen Befestigungsbereich 76, der sich von dem Grundkörper 72 aus nach hinten erstreckt, um den Abschlußfingerabschnitt 70 an der Tragschiene 12 anzubringen, und einen einzigen Finger 78 enthält, der sich von dem Grundkörper 72 aus nach vorne erstreckt. Der Grundkörper 72 und der einzige Finger 78 definieren einen Schlitz 79 zur Aufnahme einer endseitigen Klinge 24. Der Grundkörper 72 bildet einen abgeschlossenen Bereich, in dem die Klinge 24 hin und her bewegt werden kann. Ein sich nach vorne erstreckender Deckel 80 ist mittels derselben genannten Schrauben 39 an die Tragschiene 12 und den Abschlußfingerabschnitt 70 angebracht.

## Patentansprüche

1. Mähmesser mit einem Messerträger (18) und wenigstens einer Klinge (24), die mittels wenigstens einer Schraube (26) auf dem Messerträger (18) festgelegt wird, die sich durch eine Öffnung (22) in dem Messerträger (18) und ein Loch (30) in der Klinge (24) erstreckt, dadurch gekennzeichnet, daß die Öffnung (22) und der in der Öffnung (22) aufzunehmenden Hals (36) der Schraube (26) von unrundem, nicht kantigem Querschnitt sind.

2. Mähmesser nach Anspruch 1, dadurch gekennzeichnet, daß der Querschnitt oval oder elliptisch ist.
